(19) Europäisches Patentamt
European Patent Office
Office européen des brevets

(11) **EP 3 094 500 B1**

(12) **FASCICULE DE BREVET EUROPEEN**

(45) Date de publication et mention
de la délivrance du brevet:
**24.07.2019 Bulletin 2019/30**

(21) Numéro de dépôt: **14805823.3**

(22) Date de dépôt: **25.11.2014**

(51) Int Cl.:
***B60C 9/04*** *(2006.01)*     ***B60C 9/20*** *(2006.01)*
***B60C 11/00*** *(2006.01)*

(86) Numéro de dépôt international:
**PCT/EP2014/075547**

(87) Numéro de publication internationale:
**WO 2015/086310 (18.06.2015 Gazette 2015/24)**

(54) **PNEUMATIQUE PRESENTANT UNE PRESSION NOMINALE REDUITE ET UNE FLECHE RELATIVE SOUS CHARGE NOMINALE AUGMENTEE**

REIFEN MIT REDUZIERTEM NENNDRUCK UND ERHÖHTER RELATIVER ABLENKUNG UNTER NENNLAST

TYRE HAVING A REDUCED NOMINAL PRESSURE AND AN INCREASED RELATIVE DEFLECTION UNDER NOMINAL LOAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2013 FR 1362287**

(43) Date de publication de la demande:
**23.11.2016 Bulletin 2016/47**

(73) Titulaire: **Compagnie Générale des Etablissements Michelin**
**63000 Clermont-Ferrand (FR)**

(72) Inventeur: **FOUCHER, Benoît**
**F-63040 Clermont-Ferrand Cedex 9 (FR)**

(74) Mandataire: **Le Cam, Stéphane Georges Elie et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**FR-A1- 2 857 621    FR-A1- 2 950 838**

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers, équipés de roues dont les jantes présentent un diamètre nominal supérieur ou égal à 22.5 pouces.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Le document FR 2 857 621 A1 décrit encore un pneumatique comportant une armature sommet formée de deux couches de travail et d'une couche d'éléments de renforcement circonférentiels dont l'épaisseur du bloc sommet est de l'ordre de 30 mm au niveau du plan équatorial.

Les résultats ainsi obtenus en termes d'endurance et d'usure lors de roulages prolongés sur routes à grande vitesse sont le plus souvent satisfaisants. Toutefois, il apparaît que dans certaines conditions de roulage, notamment dans le cas de surcharge, certains pneumatiques présentent parfois une usure plus prononcée sur une partie de leur bande de roulement.

En outre, quelles que soient les solutions envisagées telles que présentées précédemment, la présence d'une couche d'éléments de renforcement supplémentaire conduit à une masse plus importante du pneumatique et à des coûts de fabrication des pneumatiques plus importants.

Le document WO 10/069676 propose une couche d'éléments de renforcement circonférentiels répartis selon un pas variable. Selon les pas choisis, plus espacés dans les parties centrale et intermédiaires de la couche d'éléments de renforcement circonférentiels, il est possible de réaliser des pneumatiques dont les performances en termes d'endurance sont satisfaisantes avec des performances en termes d'usure améliorées. En outre, par rapport à un pneumatique comportant une couche d'éléments de renforcement circonférentiels répartis selon un pas constant, il est possible de diminuer la masse et le coût de tels pneumatiques bien qu'il soit nécessaire de combler l'absence d'éléments de renforcement par des masses polymériques.

Le document FR 2 950 838 décrit par ailleurs des éléments de renforcement pour armature de carcasse comme étant des câbles métalliques, avantageusement non frettés, présentant au test dit de perméabilité un débit inférieur à 20 cm3/mn.

Un but de l'invention est de fournir des pneumatiques pour véhicules "Poids-Lourds", dont les performances d'endurance et d'usure sont conservées, voire améliorées, pour des usages routiers quelles que soient les conditions d'usage et dont la masse est encore réduite par rapport à celle des pneumatiques tels que décrits précédemment.

Ce but est atteint selon l'invention par un pneumatique à armature de carcasse radiale, pour véhicule de type poids lourd équipé de roues dont les jantes présentent un diamètre nominal supérieur ou égal à 22.5 pouces, dont la pression nominale (Pn) est comprise entre 4 et 8 bars et la flèche relative (Fr) sous charge nominale satisfait la relation Fr ≥ 0.14 + (Pn -5) x 0.013, comprenant une armature de sommet formée d'au moins deux couches de sommet de travail d'éléments de renforcement, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, ladite armature de sommet comprenant additionnellement au moins une couche d'éléments de renforcement, parallèles entre eux dans la couche et orientés circonférentiellement, les éléments de renforcement de l'armature de carcasse présentant un diamètre inférieur à 1 mm et étant composés de fils de diamètre strictement supérieur à 0.16 mm, lesdits éléments de renforcement de l'armature de carcasse étant des câbles métalliques, avantageusement non frettés, présentant au test dit de perméabilité un débit inférieur à 20 cm3/mn et la distance radiale mesurée dans le plan équatorial entre la surface extérieure de la bande de roulement et la surface intérieure du pneumatique étant inférieure à 32 mm.

La charge nominale est celle définie par les normes de l'ETRTO (European Tyre and Rim Technical Organisation) pour une dimension de pneumatique donnée.

Le diamètre nominal d'une jante est également celui défini par les normes de l'ETRTO.

Par définition, la flèche sous charge nominale d'un pneumatique est sa déformation radiale, ou variation relative de hauteur radiale, lorsque celui-ci passe d'un état gonflé non chargé à un état gonflé chargé en statique, dans des conditions de charge nominale et de 80% de la pression nominale, les pression et charge nominales étant telles que définies par les normes de l'ETRTO de l'année 2013, pour une dimension de pneumatique donnée. La flèche relative est définie par le rapport de la variation de la hauteur radiale du pneumatique sur la moitié de la différence entre le diamètre extérieur du pneumatique et le diamètre nominal de la jante mesuré (diamètre au « seat »). Le diamètre extérieur du pneumatique est mesuré en statique dans un état non chargé gonflé à la pression nominale.

Les mesures d'épaisseur de mélange caoutchouteux sont effectuées sur une coupe transversale d'un pneumatique, le pneumatique étant donc dans un état non gonflé.

Au sens de l'invention, des éléments parallèles entre eux dans la couche et orientés circonférentiellement peuvent être des éléments de renforcement rectilignes ou des éléments de renforcement orientés principalement selon une direction circonférentielle et ondulés autour de cette direction principale.

Au sens de l'invention encore, ladite au moins une couche additionnelles d'éléments de renforcement circonférentiels peut encore au sens de l'invention être positionnée radialement à l'intérieur desdites au moins deux couches de sommet de travail, radialement à l'extérieur desdites au moins deux couches de sommet de travail ou bien encore entre lesdites au moins deux couches de sommet de travail.

Avantageusement selon l'invention, les éléments de renforcement de ladite au moins une couche additionnelle d'éléments de renforcement, parallèles entre eux dans la couche et orientés circonférentiellement sont des câbles métalliques.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm$^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de $\pm$ 0,2 cm$^3$/min, les valeurs mesurées inférieures ou égales à 0,2 cm$^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Avantageusement selon l'invention, lesdits éléments de renforcement de l'armature de carcasse sont composés de fils de diamètre inférieur ou égal 0.20 mm.

De préférence selon l'invention, la pression nominale du pneumatique est inférieure à 7,5 bars et de préférence encore supérieure à 5 bars.

De préférence également selon l'invention, la flèche relative sous charge nominale est supérieure à 18 %.

Les pneumatiques conformes à l'invention présentent effectivement une masse réduite par rapport à des pneumatiques de même dimension réalisés de manière plus usuelle, avec notamment une épaisseur réduite du sommet et notamment une épaisseur réduite de la bande de roulement. L'épaisseur usuelle du sommet d'un tel pneumatique, correspondant à la distance radiale mesurée dans le plan équatorial entre la surface extérieure de la bande de roulement et la surface intérieure du pneumatique, est habituellement supérieure à 35 mm, l'épaisseur de la bande de roulement étant supérieure à 22 mm.

Selon l'invention, l'épaisseur de la bande de roulement est avantageusement inférieure à 20 mm.

Pour permettre une réduction de l'épaisseur du sommet, les inventeurs ont décidé de s'orienter vers un usage des pneumatiques avec une pression nominale réduite et de préférence inférieure à 7.5 bars associée à une flèche relative sous charge nominale augmentée et de préférence supérieure à 18%. Des conditions d'utilisation de pneumatiques avec une pression de gonflage de l'ordre de 20 % inférieure aux conditions usuelles d'utilisation permettent effectivement de moins solliciter le sommet du pneumatique notamment en termes d'usure. Les inventeurs ont par ailleurs su mettre en évidence que l'augmentation de la rigidité circonférentielle due à la présence d'au moins une couche d'éléments de renforcement, parallèles entre eux dans la couche et orientés circonférentiellement, permet de maintenir une usure régulière.

Les inventeurs ont encore su mettre en évidence que des éléments de renforcement de l'armature de carcasse présentant un diamètre inférieur à 1 mm et étant composés de fils de diamètre strictement supérieur à 0.16 mm, associés à des taux de pénétration plus élevés qu'habituellement, conformément à l'invention, semblent permettre au pneumatique de supporter les sollicitations générées lors de roulage et notamment lors du passage dans l'aire de contact avec une pression nominale de préférence inférieure à 7.5 bars associée à une flèche relative sous charge nominale de préférence supérieure à 18%. Les éléments de renforcement de l'armature de carcasse sont alors effectivement soumis à des phénomènes de fatigue.

Les résultats obtenus avec les pneumatiques selon l'invention ont ainsi mis en évidence qu'ils permettent de maintenir des propriétés d'endurance et d'usure satisfaisantes lors de roulages avec des conditions de pression de gonflage de l'ordre de 20 % inférieures aux pressions de gonflage usuelles, lesdits pneumatiques présentant une flèche relative sous charge nominale de préférence supérieure à 18%.

Les inventeurs ont encore su mettre en évidence que l'association des conditions de pression de gonflage de l'ordre de 20 % inférieures aux pressions de gonflage usuelles avec des taux de pénétration des éléments de renforcement de l'armature de carcasse plus élevés qu'habituellement conduit à une altération moindre des éléments de renforcement, notamment de l'armature de carcasse, du fait des phénomènes de « thermooxydation ». Les inventeurs proposent encore ainsi de réduire les épaisseurs des mélanges polymériques radialement les plus intérieurs et formant la cavité du pneumatique pour diminuer encore la masse du pneumatique.

L'invention concerne plus particulièrement des pneumatiques de type "Poids-Lourds", dont le rapport de la hauteur sur jante H sur sa largeur axiale maximale S, ou rapport de forme, est strictement supérieur à 0,64.

Le rapport d'aspect H/S est le rapport de la hauteur H du pneumatique sur jante sur la largeur axiale maximale S du pneumatique, lorsque ce dernier est monté sur sa jante de service et gonflé à sa pression nominale. La hauteur H, est définie comme la différence entre le rayon maximal de la bande de roulement et le rayon minimal du bourrelet.

Avantageusement selon l'invention, la distance radiale mesurée dans le plan équatorial entre la surface extérieure de la bande de roulement et la surface intérieure du pneumatique, est supérieure à 15 mm.

Selon un mode de réalisation préféré de l'invention, le rapport entre la largeur de la bande de roulement et la largeur maximale du pneumatique est inférieur ou égal à 0.80. Le rapport entre la largeur de la bande de roulement et la largeur maximale de pneumatiques usuels est généralement supérieur d'au moins 3.5 % comparé au rapport selon notre invention qui est inférieur ou égal à 0.80. Les inventeurs ont su mettre en évidence qu'un usage à une pression de l'ordre de 20 % inférieure aux pressions usuelles permet de diminuer la largeur de la bande de roulement tout en conservant les propriétés d'usure, notamment du fait d'une surface de contact de la bande de roulement avec le sol conservée. Le pneumatique selon l'invention peut ainsi encore être allégé, les largeurs des couches constituant l'armature de sommet étant en outre diminuées en relation avec la diminution de la largeur de la bande de roulement.

Les mesures de largeurs sont réalisées sur un pneumatique monté sur jante, gonflé aux conditions nominales (celles du pneumatique selon l'invention étant 80% de celle du pneumatique usuel) et non chargé.

Selon un mode de réalisation préféré de l'invention, les câbles de l'armature de carcasse présentent au test dit de perméabilité un débit inférieur à 10 cm$^3$/mn et de préférence encore inférieur à 2 cm$^3$/mn.

Selon une variante avantageuse de l'invention, les éléments de renforcement métalliques d'au moins une couche de l'armature de carcasse sont des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique.

Des câbles dits "à couches" ("*layered cords*") ou "multicouches" sont des câbles constitués d'un noyau central et d'une ou plusieurs couches de brins ou fils pratiquement concentriques disposées autour de ce noyau central.

L'invention propose encore un pneumatique armature de carcasse radiale, pour véhicule de type poids lourd équipé de roues dont les jantes présentent un diamètre nominal supérieur ou égal à 22.5 pouces, dont la pression nominale (Pn) est comprise entre 4 et 8 bars et la flèche relative (Fr) sous charge nominale satisfait la relation Fr $\geq$ 0.14 + (Pn -5) x 0.013, comprenant une armature de sommet formée d'au moins deux couches de sommet de travail d'éléments de renforcement, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, ladite armature de sommet comprenant additionnellement au moins une couche d'éléments de renforcement, parallèles entre eux dans la couche et orientés circonférentiellement, les éléments de renforcement de l'armature de carcasse présentant un diamètre inférieur à 1 mm et étant composés de fils de diamètre strictement supérieur à 0.16 mm, lesdits éléments de renforcement métalliques d'au moins une couche de l'armature de carcasse étant des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique et la distance radiale mesurée dans le plan équatorial entre la surface extérieure de la bande de roulement et la surface intérieure du pneumatique étant inférieure à 32 mm.

Au sens de l'invention, des câbles, à au moins deux couches, au moins une couche interne étant gainée d'une couche constituée d'une composition polymérique présentent au test dit de perméabilité un débit inférieur à 20 cm3/mn et avantageusement inférieur à 2 cm3/mn.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention peut comprendre, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C3 est une couche saturée, c'est-à-dire qu'il n'existe pas suffisamment de place dans cette couche pour y ajouter au moins un (N+1)ème fil de diamètre $d_3$, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

De préférence, la gaine de caoutchouc présente une épaisseur moyenne allant de 0,010 mm à 0,040 mm.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche d'armature de carcasse sont par exemple choisis parmi les câbles décrits dans les demandes de brevet WO 2005/071157, WO 2010/012411, WO 2010/054790 et WO 2010/054791.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, la couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par ladite première couche de mélange de caoutchouc au moins sur le restant de la largeur commune aux dites deux couches de travail.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement, la contrainte de traction correspondant à la tension mesurée, avec une pré-tension de 5N, ramenée à la section de métal de l'élément de renforcement.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la couche d'éléments de renforcement circonférentiels sont habituellement dénommés éléments "bi-module".

Selon une réalisation préférée de l'invention, la pente sensiblement constante et forte apparaît à partir d'un allongement relatif compris entre 0,4% et 0,7%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de construction 3x(0.26+6x0.23) 5.0/7.5 SS. Un tel câble présente un module sécant à 0,7 % égal à 45 GPa et un module tangent maximum égal à 100 GPa, mesurés sur une courbe contrainte de traction en fonction de l'allongement, la contrainte de traction correspondant à la tension mesurée, avec une pré-tension de 5N, ramenée à la section de métal de l'élément de renforcement, de 0.98 mm$^2$ dans le cas de l'exemple considéré.

Selon un deuxième mode de réalisation de l'invention, les éléments de renforcement circonférentiels peuvent être formées d'éléments métalliques et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche d'éléments de renforcement circonférentiels est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche d'éléments de renforcement circonférentiels étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche d'éléments de renforcement circonférentiels est inférieur au module d'élasticité à la traction, mesuré dans les mêmes conditions, de la couche de sommet de travail la plus extensible.

Egalement pour diminuer la masse des pneumatiques, selon une variante avantageuse de l'invention, les éléments de renforcement desdites au moins deux couches de sommet de travail présentent un diamètre inférieur à 1.1 mm, lesdits éléments de renforcement étant eux-mêmes composés de fils de diamètre inférieur à 0.3 mm.

Avantageusement selon cette variante de réalisation de l'invention, les éléments de renforcement desdites au moins deux couches de sommet de travail sont des éléments de renforcements inextensibles.

De préférence encore, il s'agit de câbles métalliques.

Selon une variante avantageuse de l'invention, les éléments de renforcement desdites au moins deux couches de travail sont des câbles métalliques à couches saturées présentant au test dit de perméabilité un débit inférieur à 5 cm$^3$/mn.

Selon un mode de réalisation avantageux de l'invention, lesdits éléments de renforcement métalliques présentant au test dit de perméabilité un débit inférieur 5 cm$^3$/mn desdites au moins deux couches de travail sont des câbles à au moins deux couches saturées, au moins une couche interne étant gainée d'une couche constituée d'une composition polymérique telle qu'une composition de caoutchouc réticulable ou réticulée, de préférence à base d'au moins un élastomère diénique.

Les résultats obtenus selon cette variante de réalisation de l'invention, ont effectivement mis en évidence qu'à performances au moins équivalentes en termes d'endurance et d'usure, les pneumatiques présentent une masse encore inférieure. En effet, la réduction du diamètre des éléments de renforcement des couches de travail comparé à celui desdits éléments de renforcement dans les pneumatiques usuels conduit encore à un gain en masse. Le diamètre usuel desdits éléments de renforcement est habituellement supérieur à 1.3 mm.

De préférence selon cette variante de réalisation de l'invention, lesdits éléments de renforcement desdites au moins deux couches de sommet de travail satisfont la relation suivante :

$$(Fr \times 4 \cos^2\alpha) / (P \times 0.75\ Pg \times Ø) < 5,$$

avec, Fr, la force rupture des éléments de renforcement mesurée sur des éléments de renforcement extraits du pneumatique, exprimée en daN,
α, l'angle moyen formé entre les éléments de renforcement desdites au moins deux couches de sommet de travail et la direction circonférentielle au niveau du plan équatorial,
P, le pas de répartition moyen, au niveau du plan équatorial, des éléments de renforcement desdites au moins deux couches de sommet de travail, exprimé en mm,
Pg, la pression de gonflage du pneumatique, correspondant à la charge nominale, exprimée en daN/mm$^2$,

Ø, le diamètre interne du pneumatique mesuré dans le plan équatorial, exprimé en mm.

Au sens de l'invention, le pas dans une partie de la couche d'éléments de renforcement est la distance entre deux éléments de renforcement consécutifs. Elle est mesurée entre les axes longitudinaux desdits éléments de renforcement selon une direction perpendiculaire à au moins l'un desdits axes longitudinaux. Les pas Pi desdites au moins deux couches de sommet de travail sont mesurés sur un pneumatique non monté.

Le diamètre interne Ø est mesuré sur un pneumatique monté et gonflé à la pression de gonflage Pg.

Le diamètre d des éléments de renforcement desdites au moins deux couches de travail est mesuré sur des éléments de renforcements extraits du pneumatique et préalablement dégagés de tout résidu polymérique externe.

La relation $(Fr \times 4 \cos^2\alpha) / (P \times 0.75\ Pg \times Ø) < 5$ traduit une condition selon laquelle les inventeurs jugent suffisant l'apport en termes de rigidité circonférentielle par les couches de travail notamment au sommet du pneumatique en prenant en compte la présence d'au moins une couche d'éléments de renforcement orientés circonférentiellement.

Les inventeurs ont encore su mettre en évidence que cet allègement de l'armature sommet du pneumatique s'associe à une diminution de son épaisseur du fait de la réduction du diamètre des éléments de renforcement des couches de travail. Cette diminution de l'épaisseur de l'armature de travail s'associe à des épaisseurs de mélange polymériques réduites par rapport à celles des pneumatiques usuels.

Les inventeurs ont également mis en évidence que la diminution de la rigidité circonférentielle résultant de l'allégement des couches de travail permet de réduire ladite rigidité circonférentielle globale de l'armature sommet du pneumatique et notamment de réduire celle-ci au centre du pneumatique, c'est-à-dire autour du plan équatorial, et ainsi permet d'améliorer les propriétés du pneumatique en termes d'usure. En effet, l'apparition d'inhomogénéités d'usure entre le centre et le bord de la bande de roulement apparaissant dans certaines conditions de roulage est diminuée par rapport à ce que l'on peut observer sur des conceptions plus usuelles. La diminution des diamètres des éléments de renforcement desdites au moins deux couches de travail permet encore de diminuer la sensibilité du pneumatique aux agressions de la bande de roulement, l'architecture sommet étant selon l'invention globalement plus souple qu'avec des pneumatiques plus usuels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement métalliques en acier faisant, avec la direction circonférentielle, un angle supérieur à 50° et de même sens que celui de l'angle formé par les éléments de renforcement de la couche radialement la plus proche de l'armature de carcasse.

L'invention propose encore un ensemble monté constitué d'une roue dont la jante présente un diamètre nominal supérieur ou égal à 22.5 pouces et d'un pneumatique conforme à celui décrit précédemment dans sa forme générique ou dans ses variantes de réalisation ou encore dans ses réalisations préférentielles ou avantageuses.

D'autres détails et caractéristiques avantageux de l'invention ressortiront ci-après de la description des exemples de réalisation de l'invention en référence aux figures qui représentent :

- figure 1, une vue méridienne d'un schéma d'un pneumatique selon un mode de réalisation de l'invention,

- figure 2, une représentation schématique d'une vue en coupe d'un exemple d'un câble d'armature de carcasse du pneumatique de la figure 1.

Les figures ne sont pas représentées à l'échelle pour en simplifier la compréhension.

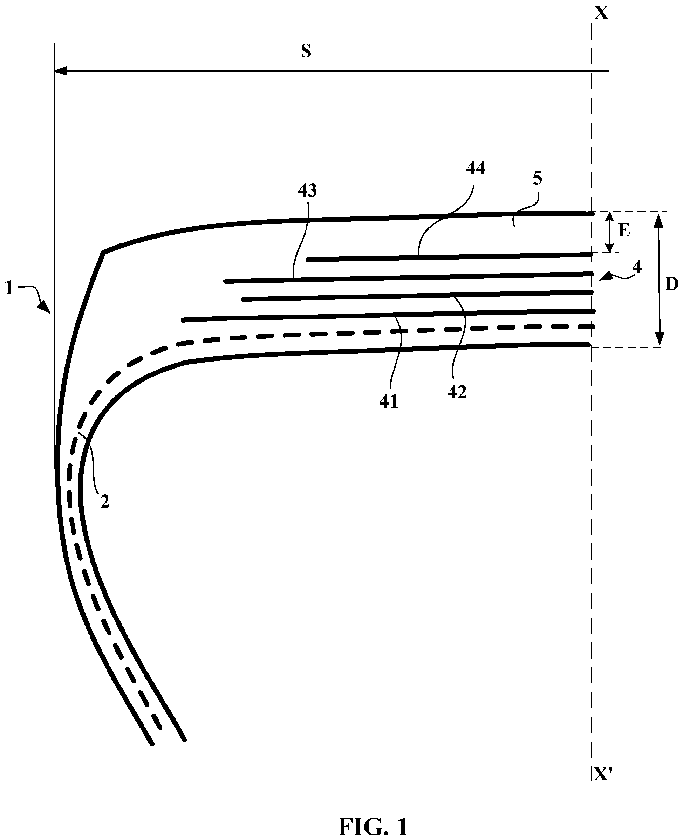

La figure 1 ne représente qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles non frettés, de construction 2 + 7 x 0.35 7.5/15 SS, formant avec la direction circonférentielle au niveau du plan équatorial un angle égal à 25°.

- d'une couche d'éléments de renforcement circonférentiels 42 formée de câbles métalliques en acier de type "bi-module", de construction 3x(0.26+6x0.23) 5/7.5 SS,

- d'une seconde couche de travail 43 formée de câbles métalliques inextensibles non frettés, de construction 2 + 7 x 0.35 7.5/15 SS, formant avec la direction circonférentielle au niveau du plan équatorial un angle égal à 25° et croisés avec les câbles métalliques de la couche 41,

- d'une couche de protection 44 formées de câbles métalliques élastiques de construction 3x2x0.35 4/6 SS.

La largeur axiale L41 de la première couche de travail 41 est égale à 234 mm.

La largeur axiale L42 de la couche d'éléments de renforcement circonférentiels 42 est égale à 196 mm.

La largeur axiale L43 de la deuxième couche de travail 43 est égale à 216 mm.

L'armature de sommet est elle-même coiffée d'une bande de roulement 5.

L'épaisseur du sommet mesurée selon la direction radiale dans le plan équatorial entre la surface extérieure de la bande de roulement et la surface intérieure du pneumatique est égale à 30 mm.

L'épaisseur de la bande de roulement mesurée selon la direction radiale dans le plan équatorial entre un point radialement le plus extérieur d'un élément de renforcement de la couche de protection 44 et la surface extérieure de la bande de roulement est égal à 19 mm.

Les mesures d'épaisseur sont effectuées sur une coupe transversale du pneumatique, celui-ci étant par conséquent non monté et non gonflé.

Concernant l'armature de carcasse, conformément à l'invention, les éléments de renforcement sont des câbles métalliques de construction 1x0.20+6x0.18+12x0.18 10/10 ZZ.

De tels câbles présentent un diamètre égal à 0.95 mm.

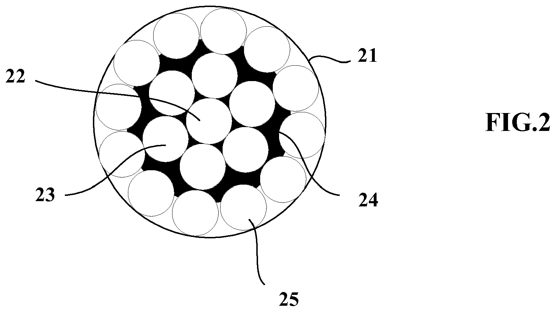

La figure 2 illustre une représentation schématique de la section d'un tel câble 21 d'armature de carcasse du pneumatique 1 de la figure 1. Ce câble 21 est un câble à couche de structure 1+6+12, non fretté, constitué d'un noyau central formé d'un fil 22, d'une couche intermédiaire formée de six fils 23 et d'une couche externe formée de douze fils 25.

Il présente les caractéristiques suivantes (d et p en mm) :

- structure 1+6+12 ;
- $d_1$ = 0.20 (mm);
- $d_2$ = 0.18 (mm);
- $p_2$ = 10 (mm)
- $d_3$ = 0.18 (mm);
- $p_2$ = 10 (mm),
- $(d_2/ d_3)$ = 1 ;

avec $d_2$, $p_2$, respectivement le diamètre et le pas d'hélice de la couche intermédiaire et $d_3$ et $p_3$, respectivement le diamètre et le pas de d'hélice des fils de la couche externe.

L'âme du câble constitué du noyau central formé du fil 22 et de la couche intermédiaire formée des six fils 23 est, conformément à l'invention, gainé par une composition de caoutchouc 24 à base d'élastomère diénique non vulcanisé (à l'état cru). Le gainage est obtenu via une tête d'extrusion de l'âme constituée du fil 22 entouré des six fils 23, suivi d'une opération finale de retordage ou câblage des 12 fils 25 autour de l'âme ainsi gainé.

L'aptitude à la pénétration du câble 21, mesurée selon la méthode décrite précédemment, est égale à 95 %.

La composition élastomérique constituant la gaine de caoutchouc 24 est réalisée à partir d'une composition telle que décrite précédemment et présente dans le cas présent la même formulation, à base de caoutchouc naturel et de noir de carbone, que celle des couches de calandrage 13 de l'armature de carcasse que les câbles sont destinés à renforcer.

Conformément à l'invention, les câbles de l'armature de carcasse qui présente un diamètre inférieur à 1 mm, et qui sont composés de fils de diamètre supérieur à 0.16 mm, permettent de réaliser des pneumatiques sont les performances en termes d'endurance sont satisfaisantes, aux pressions de gonflage selon l'invention.

Des essais relatifs à l'endurance ont été réalisés avec le pneumatique réalisé selon l'invention, et comparés avec un pneumatique de référence identique en dimension.

Le pneumatique de référence comporte la même armature de sommet et comporte une armature de carcasse dont les câbles sont de formule 1x0.20+6x0.18+12x0.18 10/10 ZZ, lesdits câbles ne comportant pas de couche de gainage constituée d'une composition de caoutchouc 24 à base d'élastomère diénique.

La distance radiale D mesurée dans le plan équatorial entre la surface extérieure de la bande de roulement et la surface intérieure du pneumatique est égale à 35 mm.

L'épaisseur de la bande de roulement dans le plan équatorial est égale à 23 mm.

Le pneumatique selon l'invention permet ainsi un gain en masse de 6 Kg, représentant environ 9 % de la masse globale du pneumatique par rapport au pneumatique de référence.

Le pneumatique selon l'invention est gonflé à une pression de 7.2 bars. Le pneumatique de référence est gonflé à une pression de 9 bars.

La flèche relative sous charge nominale du pneumatique selon l'invention est égale à 18.5 %.

La flèche relative sous charge nominale du pneumatique de référence est égale à 15 %.

Les essais réalisés ont consisté en des tests de roulage destructif sur volant ; ce type de tests sur volant simule des essais sur circuit en ligne droite et de longue durée.

Les conditions de charge sont les mêmes pour le pneumatique selon l'invention et le pneumatique de référence.

Le pneumatique selon l'invention a parcouru un kilométrage sensiblement équivalent à celui parcouru par le pneumatique de référence.

D'autres essais relatifs à la performance d'usure du pneumatique ont été réalisés avec les mêmes pneumatiques. Les tests d'usure sont réalisés de manière identique pour les deux pneumatiques en faisant rouler des véhicules équipés de ces pneumatiques sur des pistes représentatives d'un usage classique. Après un kilométrage de 50 000 Km, l'état d'usure des pneumatiques est sensiblement identique en termes d'apparence et de taux d'usure.

Les inventeurs ont encore mis en évidence lors des essais que le pneumatique selon l'invention conduit à des performances en termes de résistance au roulement améliorées par rapport au pneumatique de référence malgré son utilisation à une pression de gonflage inférieure de l'ordre de 20 %. En effet, l'homme du métier aurait pu s'attendre dans ces conditions de roulage à pénaliser la résistance au roulement du pneumatique. Il semble que les gains en masse sont suffisants pour compenser l'effet dû à la pression et même améliorer cette performance.

D'autres pneumatiques conformes à l'invention ont encore été réalisés ; par rapport à ceux réalisés précédemment, seule l'armature sommet a été modifiée par l'utilisation de câbles de type 0.26 gainé + 6x0.26 15 S. Le pneumatique ainsi réalisé selon l'invention autorise ainsi un gain en masse de 7 Kg, représentant environ 10.5 % de la masse globale du pneumatique par rapport au pneumatique de référence.

Par ailleurs, les mêmes essais ont été réalisés avec ce pneumatique gonflé à une pression de 7.2 bars et ont montré des performances en usure et endurance semblables à celles obtenues avec les pneumatiques précédemment décrit.

Enfin, les performances en résistance au roulement sont encore améliorées avec ce deuxième pneumatique réalisé conformément à l'invention.

**Revendications**

1. Pneumatique (1) pour véhicule de type poids lourd équipé de roues dont les jantes présentent un diamètre nominal supérieur ou égal à 22.5 pouces, à armature de carcasse radiale dont la pression nominale Pn est comprise entre 4 et 8 bars et la flèche relative Fr sous charge nominale satisfait la relation $Fr \geq 0.14 + (Pn - 5) \times 0.013$, comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, l'armature de sommet (4) comprenant additionnellement au moins une couche d'éléments de renforcement (42), parallèles entre eux dans la couche et orientés circonférentiellement, la distance radiale (D) mesurée dans le plan équatorial entre la surface extérieure de la bande de roulement et la surface intérieure du pneumatique étant inférieure à 32 mm, **caractérisé en ce que** les éléments de renforcement de l'armature de carcasse présentent un diamètre inférieur à 1 mm, **en ce que** lesdits éléments de renforcement de l'armature de carcasse sont composés de fils de diamètre strictement supérieur à 0.16 mm, et **en ce que** lesdits éléments de renforcement de l'armature de carcasse sont des câbles métalliques, avantageusement non frettés, présentant au test dit de perméabilité un débit inférieur à 20 cm³/mn.

2. Pneumatique (1) selon la revendication 1, **caractérisé en ce que** lesdits éléments de renforcement de l'armature de carcasse sont composés de fils de diamètre inférieur ou égal 0.20 mm.

3. Pneumatique (1) selon la revendication 1 ou 2, **caractérisé en ce que** la pression nominale Pn du pneumatique est inférieure à 7.5 bars.

4. Pneumatique (1) selon l'une des revendications précédentes, **caractérisé en ce que** la flèche relative Fr sous charge nominale du pneumatique est supérieure à 18%.

5. Pneumatique (1) selon l'une des revendications précédentes, **caractérisé en ce que** le rapport d'aspect H/S est strictement supérieur à 0,64.

6. Pneumatique (1) selon l'une des revendications précédentes, **caractérisé en ce que** la distance radiale (D) mesurée dans le plan équatorial entre la surface extérieure de la bande de roulement et la surface intérieure du pneumatique est supérieure à 15 mm.

7. Pneumatique (1) selon l'une des revendications précédentes, **caractérisé en ce que** le rapport entre la largeur de la bande de roulement et la largeur maximale du pneumatique est inférieur ou égal à 0.80.

8. Pneumatique (1) selon l'une des revendications précédentes, **caractérisé en ce que** les éléments de renforcement métalliques d'au moins une couche de l'armature de carcasse sont des câbles (21) à au moins deux couches et **en ce qu'**au moins une couche interne est gainée d'une couche (24) constituée d'une composition polymérique telle qu'une composition de caoutchouc non réticulable, réticulable ou réticulée, de préférence à base d'au moins un élastomère diénique.

9. Pneumatique (1) pour véhicule de type poids lourd équipé de roues dont les jantes présentent un diamètre nominal supérieur ou égal à 22.5 pouces, à armature de carcasse radiale dont la pression nominale Pn est comprise entre 4 et 8 bars et la flèche relative Fr sous charge nominale satisfait la relation $Fr \geq 0.14 + (Pn-5) \times 0.013$, comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, l'armature de sommet (4) comprenant additionnellement au moins une couche d'éléments de renforcement (42), parallèles entre eux dans la couche et orientés circonférentiellement, la distance radiale (D) mesurée dans le plan équatorial entre la surface extérieure de la bande de roulement et la surface intérieure du pneumatique étant inférieure à 32 mm **caractérisé en ce que** les éléments de renforcement de l'armature de carcasse présentent un diamètre inférieur à 1 mm, **en ce que** lesdits éléments de renforcement de l'armature de carcasse (2) sont composés de fils de diamètre strictement supérieur à 0.16 mm, **en ce que** lesdits éléments de renforcement métalliques d'au moins une couche de l'armature de carcasse (2) sont des câbles (21) à au moins deux couches, et **en ce qu'**au moins une couche interne desdits câbles est gainée d'une couche (24) constituée d'une composition polymérique telle qu'une composition de caoutchouc non réticulable, réticulable ou réticulée, de préférence à base d'au moins un élastomère diénique.

10. Pneumatique (1) selon l'une des revendications précédentes, **caractérisé en ce que** l'armature de sommet (4) comporte entre deux couches de sommet de travail (41, 43) au moins une couche d'éléments de renforcement (42), parallèles entre eux dans la couche et orientés circonférentiellement.

11. Pneumatique (1) selon l'une des revendications précédentes, **caractérisé en ce que** les éléments de renforcement de ladite au moins une couche (42) d'éléments de renforcement parallèles entre eux dans la couche et orientés circonférentiellement sont des éléments de renforcement métalliques présentant un module sécant à 0,7 % d'allongement compris entre 10 et 120 GPa et un module tangent maximum inférieur à 150 GPa.

12. Pneumatique (1) selon l'une des revendications précédentes, **caractérisé en ce que** les éléments de renforcement desdites au moins deux couches de sommet de travail (41, 43) présentent un diamètre inférieur à 1.1 mm, lesdits éléments de renforcement étant eux-mêmes composés de fils de diamètre inférieur à 0.3 mm.

13. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 50° en valeur absolue.

14. Pneumatique (4) selon l'une des revendications précédentes, **caractérisé en ce que** l'armature de sommet (4) est complétée radialement à l'extérieur par au moins une couche supplémentaire (44), dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

**Patentansprüche**

1. Reifen (1) für ein Lastfahrzeug, das mit Rädern ausgerüstet ist, deren Felgen einen Nenndurchmesser größer oder gleich 22,5 Zoll aufweisen, mit radialer Karkassenarmierung, dessen Nenndruck Pn zwischen 4 und 8 bar liegt und dessen relative Durchbiegung Fr unter Nennlast das Verhältnis $Fr \geq 0,14 + (Pn-5) \times 0,013$ erfüllt, umfassend eine Scheitelarmierung (4), die aus mindestens zwei Arbeitsscheitelschichten (41, 43) aus Verstärkungselementen gebildet ist, die durch Bilden von Winkeln zwischen 10° und 45° mit der Umfangsrichtung von einer Schicht zur anderen gekreuzt sind, welche selbst radial von einem Laufstreifen (5) bedeckt ist, wobei der Laufstreifen an zwei Wülsten mittels zweier Flanken zusammengeführt ist, die Scheitelarmierung (4) außerdem umfassend mindestens eine Schicht aus Verstärkungselementen (42), die in der Schicht zueinander parallel sind und in der Umfangsrichtung orientiert sind, wobei der radiale Abstand (D), der in der Äquatorialebene zwischen der Außenfläche des Laufstreifens und der Innenfläche des Laufstreifens gemessen wird, weniger als 32 mm beträgt, **dadurch gekennzeichnet, dass** die Verstärkungselemente der Karkassenarmierung einen Durchmesser kleiner als 1 mm aufweisen, dadurch, dass die Verstärkungselemente der Karkassenarmierung aus Drähten mit einem Durchmesser streng größer als 0,16 mm gebildet sind, und dadurch, dass die Verstärkungselemente der Karkassenarmierung Metallseile sind, die vorteilhafterweise nicht umhüllt sind, die bei der Durchlässigkeitsprüfung einen Durchsatz kleiner als 20 $cm^3$/mn aufweisen.

**2.** Reifen (1) nach Anspruch 1, **dadurch gekennzeichnet, dass** die Verstärkungselemente der Karkassenarmierung aus Drähten mit einem Durchmesser kleiner oder gleich 0,20 mm gebildet sind.

**3.** Reifen (1) nach Anspruch 1 oder 2, **dadurch gekennzeichnet, dass** der Nenndruck Pn des Reifens weniger als 7,5 bar beträgt.

**4.** Reifen (1) nach einem der vorhergehenden Ansprüche, **dadurch gekennzeichnet, dass** die relative Durchbiegung Fr unter Nennlast des Reifens größer als 18 % ist.

**5.** Reifen (1) nach einem der vorhergehenden Ansprüche, **dadurch gekennzeichnet, dass** das Aspektverhältnis H/S streng größer als 0,64 % ist.

**6.** Reifen (1) nach einem der vorhergehenden Ansprüche, **dadurch gekennzeichnet, dass** der radiale Abstand (D), der in der Äquatorialebene zwischen der Außenfläche des Laufstreifens und der Innenfläche des Reifens gemessen wird, mehr als 15 mm beträgt.

**7.** Reifen (1) nach einem der vorhergehenden Ansprüche, **dadurch gekennzeichnet, dass** das Verhältnis zwischen der Breite des Laufstreifens und der maximalen Breite des Reifens kleiner oder gleich 0,80 ist.

**8.** Reifen (1) nach einem der vorhergehenden Ansprüche, **dadurch gekennzeichnet, dass** die metallischen Verstärkungselemente mindestens einer Schicht der Karkassenarmierung Seile (21) mit mindestens zwei Schichten sind, und dadurch, dass mindestens eine Innenschicht mit einer Schicht (24) umhüllt ist, die aus einer Polymerzusammensetzung wie einer nicht vernetzbaren, vernetzbaren oder vernetzten Gummizusammensetzung, vorzugsweise auf Basis von mindestens einem Dien-Elastomer, gebildet ist.

**9.** Reifen (1) für ein Lastfahrzeug, das mit Rädern ausgerüstet ist, deren Felgen einen Nenndurchmesser größer oder gleich 22,5 Zoll aufweisen, mit radialer Karkassenarmierung, dessen Nenndruck Pn zwischen 4 und 8 bar liegt und dessen relative Durchbiegung Fr unter Nennlast das Verhältnis Fr $\geq$ 0,14 + (Pn -5) x 0,013 erfüllt, umfassend eine Scheitelarmierung (4), die aus mindestens zwei Arbeitsscheitelschichten (41, 43) aus Verstärkungselementen gebildet ist, die durch Bilden von Winkeln zwischen 10° und 45° mit der Umfangsrichtung von einer Schicht zur anderen gekreuzt sind, welche selbst radial von einem Laufstreifen (5) bedeckt ist, wobei der Laufstreifen an zwei Wülsten mittels zweier Flanken zusammengeführt ist, die Scheitelarmierung (4) außerdem umfassend mindestens eine Schicht aus Verstärkungselementen (42), die in der Schicht zueinander parallel sind und in der Umfangsrichtung orientiert sind, wobei der radiale Abstand (D), der in der Äquatorialebene zwischen der Außenfläche des Laufstreifens und der Innenfläche des Laufstreifens gemessen wird, weniger als 32 mm beträgt, **dadurch gekennzeichnet, dass** die Verstärkungselemente der Karkassenarmierung einen Durchmesser kleiner als 1 mm aufweisen, dadurch, dass die Verstärkungselemente der Karkassenarmierung (2) aus Drähten mit einem Durchmesser streng größer als 0,16 mm gebildet sind, dadurch, dass die metallischen Verstärkungselemente mindestens einer Schicht der Karkassenarmierung (2) Seile (21) mit mindestens zwei Schichten sind, und dadurch, dass mindestens eine Innenschicht der Seile mit einer Schicht (24) umhüllt ist, die aus einer Polymerzusammensetzung wie einer nicht vernetzbaren, vernetzbaren oder vernetzten Gummizusammensetzung, vorzugsweise auf Basis von mindestens einem Dien-Elastomer, gebildet ist.

**10.** Reifen (1) nach einem der vorhergehenden Ansprüche, **dadurch gekennzeichnet, dass** die Scheitelarmierung (4) zwischen zwei Arbeitsscheitelschichten (41, 43) mindestens eine Schicht aus Verstärkungselementen (42) aufweist, die in der Schicht zueinander parallel sind und in der Umfangsrichtung orientiert sind.

**11.** Reifen (1) nach einem der vorhergehenden Ansprüche, **dadurch gekennzeichnet, dass** die Verstärkungselemente der mindestens einen Schicht (42) aus Verstärkungselementen, die in der Schicht zueinander parallel sind und in der Umfangsrichtung orientiert sind, metallische Verstärkungselemente sind, die einen Sekantenmodul bei 0,7 % Dehnung zwischen 10 und 120 GPa und einen maximalen Tangentenmodul kleiner als 150 GPa aufweisen.

**12.** Reifen (1) nach einem der vorhergehenden Ansprüche, **dadurch gekennzeichnet, dass** die Verstärkungselemente der mindestens zwei Arbeitsscheitelschichten (41, 43) einen Durchmesser kleiner als 1,1 mm aufweisen, wobei die Verstärkungselemente selbst aus Drähten mit einem Durchmesser kleiner als 0,3 mm gebildet sind.

**13.** Reifen (1) nach einem der vorhergehenden Ansprüche, **dadurch gekennzeichnet, dass** die Scheitelarmierung (4) ferner eine Triangulationsschicht aufweist, die aus metallischen Verstärkungselementen gebildet ist, die mit der Umfangsrichtung Winkel größer als 50° im Absolutwert bilden.

**14.** Reifen (4) nach einem der vorhergehenden Ansprüche, **dadurch gekennzeichnet, dass** die Scheitelarmierung (4) von mindestens einer zusätzlichen Schicht (44), Schutzschicht genannt, aus elastischen Verstärkungselementen radial außen vervollständigt ist, die bezogen auf die Umfangsrichtung mit einem Winkel zwischen 10° und 45° und derselben Richtung wie der Winkel, der von den nicht ausdehnbaren Elementen der Arbeitsschicht gebildet ist, die ihr radial benachbart ist, orientiert sind.

**Claims**

1. Tyre (1) for a vehicle of the heavy vehicle type equipped with wheels the rims of which have a nominal diameter greater than or equal to 22.5 inches, with a radial carcass reinforcement of which the nominal pressure Pn is between 4 and 8 bar and the relative deflection Fr under nominal load satisfies the relationship Fr $\geq$ 0.14 + (Pn-5) x 0.013, comprising a crown reinforcement (4) formed of at least two working crown layers (41, 43) of reinforcing elements, crossed from one layer to the other and making with the circumferential direction angles of between 10° and 45°, itself capped radially by a tread (5), the said tread being connected to two beads by two sidewalls, the crown reinforcement (4) additionally comprising at least one layer of reinforcing elements (42) that are parallel to one another within the layer and oriented circumferentially, the radial distance (D) measured in the equatorial plane between the exterior surface of the tread and the interior surface of the tyre being less than 32 mm **characterized in that** the reinforcing elements of the carcass reinforcement have a diameter less than 1 mm, **in that** the said reinforcing elements of the carcass reinforcement are made up of threads of diameters strictly greater than 0.16 mm, and **in that** the said reinforcing elements of the carcass reinforcement are metal cords, advantageously non-wrapped cords, exhibiting, in what is known as the permeability test, a flow rate less than 20 cm$^3$/min.

2. Tyre (1) according to Claim 1, **characterized in that** the said reinforcing elements of the carcass reinforcement are made up of threads of diameter less than or equal to 0.20 mm.

3. Tyre (1) according to Claim 1 or 2, **characterized in that** the nominal pressure Pn of the tyre is less than 7.5 bar.

4. Tyre (1) according to one of the preceding claims, **characterized in that** the relative deflection Fr of the tyre under nominal load is greater than 18%.

5. Tyre (1) according to one of the preceding claims, **characterized in that** the aspect ratio H/S is strictly greater than 0.64.

6. Tyre (1) according to one of the preceding claims, **characterized in that** the radial distance (D), measured in the equatorial plane, between the exterior surface of the tread and the interior surface of the tyre is greater than 15 mm.

7. Tyre (1) according to one of the preceding claims, **characterized in that** the ratio between the width of the tread and the maximum width of the tyre is less than or equal to 0.80.

8. Tyre (1) according to one of the preceding claims, **characterized in that** the metal reinforcing elements of at least one layer of the carcass reinforcement are cords (21) having at least two layers and **in that** at least an internal layer is sheathed by a layer (24) made of a polymer composition such as a composition of a rubber that is non-crosslinkable, crosslinkable or crosslinked, preferably based on at least one diene elastomer.

9. Tyre (1) for a vehicle of the heavy vehicle type equipped with wheels the rims of which have a nominal diameter greater than or equal to 22.5 inches, with a radial carcass reinforcement of which the nominal pressure Pn is between 4 and 8 bar and the relative deflection Fr under nominal load satisfies the relationship Fr $\geq$ 0.14 + (Pn-5) x 0.013, comprising a crown reinforcement (4) formed of at least two working crown layers (41, 43) of reinforcing elements, crossed from one layer to the other and making with the circumferential direction angles of between 10° and 45°, itself capped radially by a tread (5), the said tread being connected to two beads by two sidewalls, the crown reinforcement (4) additionally comprising at least one layer of reinforcing elements (42) that are parallel to one another within the layer and oriented circumferentially, the radial distance (D) measured in the equatorial plane between the exterior surface of the tread and the interior surface of the tyre being less than 32 mm **characterized in that** the reinforcing elements of the carcass reinforcement have a diameter less than 1 mm, **in that** the said reinforcing elements of the carcass reinforcement (2) are made up of threads of diameters strictly greater than 0.16 mm, **in that** the said metal reinforcing elements of at least one layer of the carcass reinforcement (2) are cords (21) having at least two layers, and **in that** at least an internal layer of the said cords is sheathed by a layer (24) made of a polymer composition such as a composition of a rubber that is non-crosslinkable, crosslinkable or crosslinked, preferably based on at least one diene elastomer.

10. Tyre (1) according to one of the preceding claims, **characterized in that** the crown reinforcement (4) comprises, between two working crown layers (41, 43), at least one layer of reinforcing elements (42) that are parallel to one another within the layer and oriented circumferentially.

11. Tyre (1) according to one of the preceding claims, **characterized in that** the reinforcing elements of the said at least one layer (42) of reinforcing elements that are parallel to one another within the layer and oriented circumferentially are metal reinforcing elements having a secant modulus at 0.7% elongation of between 10 and 120 GPa and a maximum tangent modulus of less than 150 GPa.

12. Tyre (1) according to one of the preceding claims, **characterized in that** the reinforcing elements of the said at least two working crown layers (41, 43) have a diameter less than 1.1 mm, the said reinforcing elements being themselves made up of threads of diameter less than 0.3 mm.

13. Tyre (1) according to one of the preceding claims, **characterized in that** the crown reinforcement (4) further comprises a triangulation layer formed of metal reinforcing elements making with the circumferential direction angles greater than 50° in terms of absolute value.

14. Tyre (4) according to one of the preceding claims, **characterized in that** the crown reinforcement (4) is supplemented radially on the outside by at least one additional layer (44), referred to as protective layer, of reinforcing elements referred to as elastic elements, oriented with respect to the circumferential direction at an angle of between 10° and 45° and in the same direction as the angle formed by the inextensible elements of the working layer radially adjacent to it.

**FIG. 1**

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2728510
- WO 9924269 A
- FR 2857621 A1
- WO 10069676 A
- FR 2950838
- WO 2005071157 A
- WO 2010012411 A
- WO 2010054790 A
- WO 2010054791 A